# EUROPÄISCHE PATENTSCHRIFT

(11) **EP 2 281 219 B1**
(45) Veröffentlichungstag und Bekanntmachung des Hinweises auf die Patenterteilung: **17.01.2018**
(21) Anmeldenummer: 09753516.5
(22) Anmeldetag: 04.05.2009
(51) Int. Cl.: G03B 21/14, G03B 21/20

(54) **PROJEKTOR FÜR KLEINSTE PROJEKTIONSFLÄCHEN UND VERWENDUNG EINER MEHRFARBEN-LED IN EINEM PROJEKTOR**
PROJECTOR FOR MINUTE PROJECTION SURFACES AND USE OF A MULTI-COLOR LED IN A PROJECTOR
PROJECTEUR POUR SURFACES DE PROJECTION MINIATURES ET UTILISATION D'UNE DEL POLYCHROME DANS UN PROJECTEUR

(30) Priorität: 26.05.2008 DE 102008025160
(43) Veröffentlichungstag der Anmeldung: 09.02.2011
(73) Patentinhaber: OSRAM Opto Semiconductors GmbH, 93055 Regensburg (DE)
(72) Erfinder: GRÖTSCH, Stefan, 93077 Lengfeld - Bad Abbach (DE); GÜNTHER, Ewald Karl Michael, 93128 Regenstauf (DE); WILM, Alexander, 93059 Regensburg (DE); HERRMANN, Siegfried, 94362 Neukirchen (DE)
(74) Vertreter: Epping - Hermann - Fischer
(86) Internationale Anmeldenummer: PCT/DE2009/000636
(87) Internationale Veröffentlichungsnummer: WO 2009/143800

(56) Entgegenhaltungen:
- US-A- 6 030 700
- US-A1- 2004 207 818
- US-A1- 2006 027 820
- US-A1- 2006 267 858
- US-A1- 2007 165 186
- M.H. KEUPER, S. PAOLINI, G. HARBERS,P.TSANG: "Ultra-Compact LED based Image Projector for Portable Applications" 2003 DIGEST OF TECHNICAL PAPERS, 20. Mai 2003 (2003-05-20), Seiten 713-715, XP002551444

## Beschreibung

Die vorliegende Erfindung betrifft eine kompakte Ausgestaltung von Projektoren, die insbesondere für Mobiltelefone verwendet werden können, und die dafür vorgesehene Verwendung einer Mehrfarben-LED.

Aufgabe der vorliegenden Erfindung ist es, einen besonders kompakten Projektor anzugeben, der bei kleinster Bildfläche eine möglichst gute Effizienz aufweist.

Bei Projektionssystemen für kleine Bildflächen können verschiedenfarbig emittierende LEDs verwendet werden, die nebeneinander angeordnet werden und deren Licht über geeignete optische Vorrichtungen auf einen Bildgeber gerichtet wird. Der Bildgeber wird über eine elektronische Ansteuervorrichtung betrieben und erzeugt die jeweils zu projizierende Darstellung auf einem Schirm. Die für die Farbkomposition üblicherweise verwendeten Farben Rot, Grün und Blau können in dem Bildgeber durch nebeneinander angeordnete Elemente erzeugt werden. Wenn wegen der vorgesehenen Etendue des Bildgebers nur eine geringere Fläche verwendet werden kann, kommt es zu Verlusten, die sich negativ auf die Effizienz des Projektors auswirken. Gerade bei besonders kleinen Projektoren, die zum Beispiel an Mobiltelefonen betrieben werden sollen, ist eine hohe Effizienz bei besonders kleiner Bildfläche wichtig. Das beschriebene Problem kann im Prinzip dadurch beseitigt werden, dass drei einzelne Lichtquellen, zum Beispiel LEDs, verwendet werden und diese Lichtquellen mit Hilfe dichroitischer Filter überlagert werden. Damit kann ein effizientes optisches System konstruiert werden. Ein Nachteil ist dabei jedoch der Platzbedarf der zwei oder drei erforderlichen Dichroiten und der zugehörigen Kollimationsoptiken. Es ist daher auch mit dieser Methode nicht möglich, einen sehr kompakten, in ein Mobiltelefon integrierbaren Projektor zu bauen.

Ein Projektionsgerät mit verschiedenfarbig emittierende LEDs, die nebeneinander angeordnet sind, ist beispielsweise aus der Druckschrift Keuper et al. "Ultra-Compact LED based Image Projector for Portable Applications", Digest of technical papers, 20.05.2003, Seiten 713 bis 715, bekannt.

Eine Mehrfarben-LED, bei der beispielsweise rotes Licht, blaues Licht und grünes Licht emittierende Schichten monolithisch integriert übereinander angeordnet sind, ist in der Druckschrift US 2006/027820 A1 beschrieben.

Gemäß der vorliegenden Erfindung umfasst der Projektor eine Lichtquelle und einen Bildgeber, wobei die Lichtquelle eine einzige Mehrfarben-LED ist. Das heißt, der Projektor umfasst eine einzige Mehrfarben-LED als Lichtquelle. Der Projektor kann dabei frei von optischen Elementen sein. Das heißt, der Projektor ist dann insbesondere frei von Linsen und dichroitischen Spiegeln oder Filtern. Erfindungsgemäß sind alle Schichten durch je eine anorganische Leuchtdiode gebildet. Erfindungsgemäß ist die Mehrfarben-LED eine RGB-LED, bei der Schichten zur Erzeugung von rotem, grünem und blauem Licht übereinander angeordnet sind. Erfindungsgemäß ist vorgesehen, dass die Schichten nicht epitaktisch aufeinander abgeschieden sind. Bei den Schichten handelt es sich um einzelne Leuchtdioden, wobei das Aufwachssubstrat von den grünes und blaues Licht emittierenden oberen Leuchtdioden entfernt ist, während es an der rotes Licht emittierenden untersten Leuchtdiode verbleibt. Die einzelnen Leuchtdioden können dann zum Beispiel jeweils eine Dicke von höchstens 20 *µ*m, vorzugsweise von höchstens 10 *µ*m aufweisen.

Beispielsweise ist zwischen den Schichten jeweils ein Verbindungsmaterial wie zum Beispiel ein Silikon und/oder ein Epoxidharz angeordnet, das die Schichten mechanisch miteinander verbindet. Ferner kann zwischen zwei Schichten jeweils eine strahlungsdurchlässige Kontaktschicht angeordnet sein, die zum Beispiel aus TCO (Transparent Conductive Oxide)-Material besteht und zur elektrischen Kontaktierung zumindest einer der Schichten dient. Erfindungsgemäß weist die Mehrfarben-LED eine einzige Licht emittierende Fläche auf, durch die im Betrieb des Projektors Licht der Farben rot, grün und blau treten kann. Die Licht emittierende Fläche weist dabei vorzugsweise einen Flächeninhalt von höchstens 2,5 mm², zum Beispiel höchstens 1 mm² auf.

Es folgt eine Beschreibung von nicht erfindungsgemäßen Beispielen eines Projektors anhand der beigefügten Figuren.
Die Figur 1 zeigt eine schräge Aufsicht auf eine schematisch dargestellte Stacked-Epi-LED.
Die Figur 2 zeigt ein Ausführungsbeispiel eines Projektionssystems mit Stacked-Epi-LED.
Die Figur 3 zeigt ein weiteres Ausführungsbeispiel eines Projektionssystems mit Stacked-Epi-LED.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

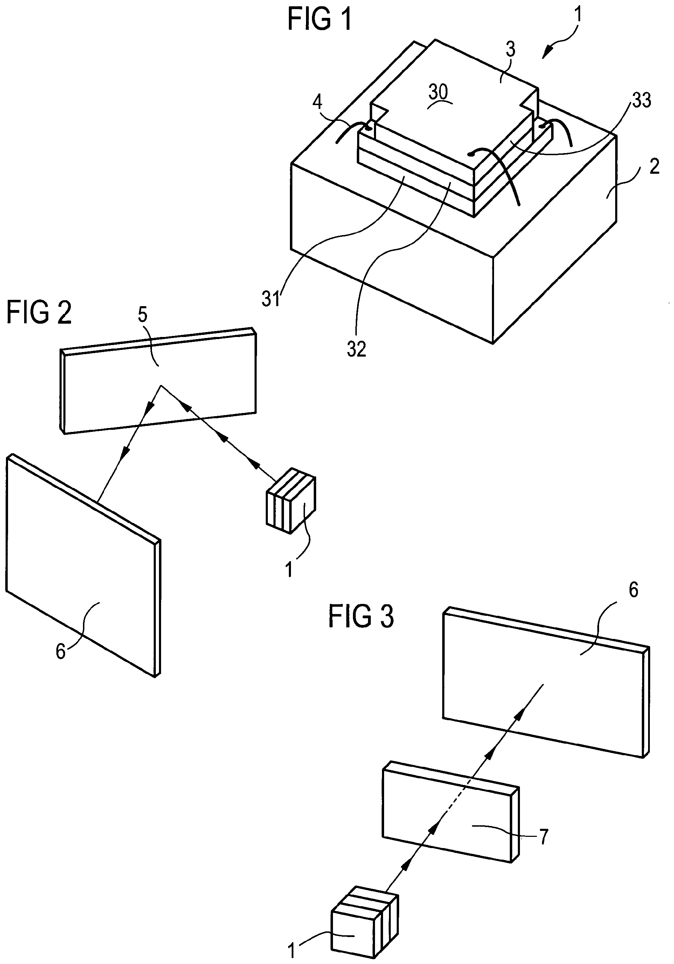

Die Figur 1 zeigt in einer schrägen Aufsicht als Beispiel für die verwendete Mehrfarben-LED eine Stacked-Epi-LED 1, die durch ein an sich bekanntes Verfahren durch epitaktisches Aufwachsen eines Stapels von Halbleiterschichten auf ein Halbleitersubstrat und anschließendes Entfernen des Substrates hergestellt werden kann. Die Stacked-Epi-LED 1 ist in dem gezeigten Ausführungsbeispiel als RGB-LED ausgebildet, so dass sie für Abstrahlung roten, grünen und blauen Lichtes geeignet ist. Auf einem Submount 2 befindet sich der Schichtstapel 3 der Halbleiterschichten, die für die Erzeugung des Lichtes der unterschiedlichen Farben vorgesehen sind.

In der schematisierten Darstellung der Figur 1 sind Bonddrähte 4 eingezeichnet, die für einen elektrischen Anschluss der Halbleiterschichten an eine in dem Submount 2 integrierte Ansteuerschaltung vorgesehen sind. Der elektrische Anschluss kann stattdessen auch in einer sonstigen an sich bekannten Weise ausgestaltet sein. Die in dem Projektor verwendete LED kann insofern prinzipiell beliebig ausgestaltet sein und insbesondere in einer herkömmlichen Weise kontaktiert und elektrisch angeschlossen sein.

Die Figur 2 zeigt eine Möglichkeit, die Stacked-Epi-LED 1 in einem System eines Projektors zu verwenden. Die Stacked-Epi-LED 1 ist hierbei so ausgerichtet, dass das Licht auf einen LCoS-Reflektor (Liquid Crystal on Silicon), auf einen DLP-Reflektor (Digital Light Processing) oder auf einen anderen als Bildgeber 5 geeigneten Reflektor gerichtet wird. Von dem Bildgeber 5 wird das Licht auf einen Schirm 6 reflektiert, auf dem das zu erzeugende Bild abgebildet wird. Ein DLP-Reflektor ist aus einer Vielzahl umklappbarer Spiegel aufgebaut, die in einer rasterartigen Anordnung einzeln ansteuerbar sind. Die LED wird so betrieben, dass durch ein sequenzielles Aufleuchten der für die verschiedenen Farben vorgesehenen Schichten die unterschiedlichen Farben in sehr kurzen zeitlichen Abständen generiert werden, so dass insgesamt ein Eindruck gemischter Farben entsteht. Diese Technik ist an sich bekannt und stellt nur eine Ausführungsform des erfindungsgemäßen Projektors dar.

Die Figur 3 zeigt ein weiteres Beispiel eines Projektionssystems, bei dem eine Stacked-Epi-LED 1 als Lichtquelle verwendet wird. Als Bildgeber 7 ist hierbei ein LCD-Bildgeber vorgesehen, der das hindurchtretende Licht in den einzelnen Bildpunkten mehr oder weniger filtert, so dass auf dem Schirm 6 die dem zu erzeugenden Bild entsprechende Farbstruktur erscheint. Der LCD-Bildgeber wird in einer an sich bekannten Weise angesteuert. Wesentlich ist auch hier, dass durch die Verwendung der Stacked-Epi-LED eine sehr kompakte Anordnung mit einer seitlich eng begrenzten Lichtabstrahlfläche erreicht wird.

## Patentansprüche

1. Projektor mit
- einer Lichtquelle (1),
- einem Bildgeber (5, 7), wobei
- die Lichtquelle (1) eine einzige Mehrfarben-LED ist, die eine RGB-LED ist, bei der Schichten (31, 32, 33) zur Erzeugung von rotem, grünem und blauem Licht übereinander angeordnet sind, **dadurch gekennzeichnet dass**
- die Schichten (31, 32, 33) nicht epitaktisch aufeinander abgeschieden sind, sondern durch einzelne anorganische Leuchtdioden gebildet sind, wobei die anorganischen Leuchtdioden eine unterste rote Leuchtdiode und grünes und blaues Licht emittierende obere Leuchtdioden aufweisen, wobei ein Aufwachssubstrat von den grünes und blaues Licht emittierenden oberen Leuchtdioden entfernt ist,
- die Mehrfarben-LED eine einzige Licht emittierende Fläche (30) aufweist, durch die im Betrieb des Projektors abwechselnd rotes, grünes und blaues Licht tritt, und
- die Licht emittierende Fläche (30) einen Flächeninhalt von höchstens 2,5 mm² aufweist.

2. Projektor nach Anspruch 1,
bei dem der Projektor einen Schirm (6) umfasst, auf dem im Betrieb des Projektors ein Bild dargestellt wird.

3. Projektor nach Anspruch 1 oder 2,
bei dem jede der Schichten (31, 32, 33) eine einzelne Leuchtdiode ist, die frei von einem Aufwachssubstrat ist.

4. Projektor nach Anspruch 3,
bei dem zwischen den Schichten jeweils ein
Verbindungsmaterial angeordnet ist, das die Schichten mechanisch miteinander verbindet.

5. Projektor nach Anspruch 3 oder 4,
bei dem zwischen den Schichten jeweils eine
strahlungsdurchlässige Kontaktschicht angeordnet ist, die zur elektrischen Kontaktierung zumindest einer der Schichten dient.

6. Projektor nach Anspruch 5,
bei dem die strahlungsdurchlässige Kontaktschicht aus TCO besteht.

7. Projektor nach einem der vorherigen Ansprüche,
bei dem die Licht emittierende Fläche (30) einen Flächeninhalt von höchstens 1 mm² aufweist.

8. Projektor nach einem der vorherigen Ansprüche,
bei dem der Bildgeber (5) ein LCoS-Reflektor ist.

9. Projektor nach einem der vorherigen Ansprüche, bei dem der Bildgeber (5) ein DLP-Reflektor mit umklappbaren Spiegeln ist.

10. Projektor nach einem der vorherigen Ansprüche, bei dem der Bildgeber (7) ein LCD-Bildgeber ist.

11. Projektor nach einem der vorherigen Ansprüche,
der für einen Einbau in einem Mobiltelefon vorgesehen ist.

12. Verwendung einer Mehrfarben-LED in einem Projektor, wobei die Mehrfarben-LED eine RGB-LED ist, bei der Schichten zur Erzeugung von rotem, grünem und blauem Licht übereinander angeordnet sind, **dadurch gekennzeichnet dass**
- die Schichten (31, 32, 33) nicht epitaktisch aufeinander abgeschieden sind, sondern durch einzelne anorganische Leuchtdioden gebildet sind, wobei die anorganischen Leuchtdioden eine unterste rote Leuchtdiode und grünes und blaues Licht emittierende obere Leuchtdioden aufweisen, wobei ein Aufwachssubstrat von den grünes und blaues Licht emittierenden oberen Leuchtdioden entfernt ist,
- die Mehrfarben-LED eine einzige Licht emittierende Fläche (30) aufweist, durch die im Betrieb des Projektors abwechselnd rotes, grünes und blaues Licht tritt, und
- die Licht emittierende Fläche (30) einen Flächeninhalt von höchstens 2,5 mm² aufweist.

## Claims

1. Projector with
- a light source (1),
- an image generator (5, 7), wherein
- the light source (1) is a single multicolor LED, which is a RGB-LED, in which layers for generating red, green, and blue light are arranged one above the other, **characterized in that**
- the layers (31, 32, 33) are not deposited upon one another epitaxially, but are formed through individual inorganic light-emitting diodes, wherein the inorganic light-emitting diodes comprise a lowermost red light-emitting diode and green- and blue-light emitting upper light-emitting diodes, wherein a growth substrate is removed from the green- and blue-light emitting upper light-emitting diodes,
- the multicolor LED comprises a single light-emitting surface (30) through which red, green and blue light alternatively passes during the operation of the projector, and
- the light-emitting surface (30) has a surface area of at most 2.5 mm².

2. Projector according to claim 1,
in which the projector includes a screen (6), on which an image is displayed during the operation of the projector.

3. Projector according to claim 1 or 2,
in which each of the layers (31, 32, 33) is a single light-emitting diode, which is free from a growth substrate.

4. Projector according to claim 3,
in which, in each case, a bonding material is arranged between the layers that mechanically connects the layers with one another.

5. Projector according to claim 3 or 4,
in which, in each case, a radiation-transmissive contact layer is arranged between the layers, which serves to electrically contact at least one of the layers.

6. Projector according to claim 5
in which the radiation-transmissive contact layer consists of TCO.

7. Projector according to one of the preceding claims, in which the light-emitting surface (30) comprises a surface area of at most 1 mm².

8. Projector according to one of the preceding claims, in which the image generator (5) is a LCoS reflector.

9. Projector according to one of the preceding claims, in which the image generator (5) is a DLP reflector with foldable mirrors.

10. Projector according to one of the preceding claims, in which the image generator (7) is an LCD image generator.

11. Projector according to one of the preceding claims, which is intended for an installation in a mobile telephone.

12. Use of a multicolor LED in a projector, wherein the multicolor LED is a RGB-LED, in which layers for generating red, green and blue light are arranged on top of one another, **characterized in that**
- the layers are not deposited upon one another epitaxially, but are formed by individual inorganic light-emitting diodes, wherein the inorganic light-emitting diodes comprise a lowermost red light-emitting diode and green- and blue-light emitting upper light-emitting diodes, wherein a growth substrate is removed from the green- and blue-light emitting upper light-emitting diodes,
- the multicolor LED comprises a single light-emitting surface (30), through which red, green and blue light alternatively passes during the operation of the projector, and
- the light-emitting surface (30) has a surface area of at most 2.5mm².

## Revendications

1. Projecteur comprenant
- une source de lumière (1),
- un imageur (5, 7),
- la source de lumière (1) étant une seule LED multicolore qui est une LED RVB dans laquelle les couches (31, 32, 33) sont disposées les unes au-dessus des autres pour générer de la lumière rouge, de la lumière verte et de la lumière bleue,
**caractérisé en ce que**
- les couches (31, 32, 33) ne sont pas isolées de manière épitaxiale les unes au-dessus des autres mais sont formées par des diodes électroluminescentes anorganiques individuelles, les diodes électroluminescentes anorganiques présentant une diode électroluminescente inférieure rouge et des diodes électroluminescentes supérieures émettant de la lumière verte et de la lumière bleue, un substrat de croissance étant retiré des diodes électroluminescentes émettant de la lumière verte et de la lumière bleue,
- **en ce que** la LED multicolore présente une seule surface (30) émettant de la lumière, à travers laquelle, pendant le fonctionnement du projecteur, passent en alternance de la lumière rouge, de la lumière verte et de la lumière bleue, et
- **en ce que** la surface (30) émettant de la lumière présente une superficie de maximum 2,5 mm².

2. Projecteur selon la revendication 1,
dans lequel le projecteur comprend un écran (6) sur lequel une image est représentée pendant le fonctionnement du projecteur.

3. Projecteur selon la revendication 1 ou 2,
dans lequel chacune des couches (31, 32, 33) est une diode électroluminescente individuelle qui est exempte d'un substrat de croissance.

4. Projecteur selon la revendication 3,
dans lequel une matière de liaison est respectivement disposée entre les couches, laquelle relie les couches entre elles de manière mécanique.

5. Projecteur selon la revendication 3 ou 4,
dans lequel une couche de contact perméable au rayonnement est respectivement disposée entre les couches, laquelle sert à la mise en contact électrique d'au moins une des couches.

6. Projecteur selon la revendication 5,
dans lequel la couche de contact perméable au rayonnement est constituée de TCO.

7. Projecteur selon l'une quelconque des revendications précédentes,
dans lequel la surface (30) émettant de la lumière présente une superficie de maximum 1 mm².

8. Projecteur selon l'une quelconque des revendications précédentes,
dans lequel l'imageur (5) est un réflecteur LCoS.

9. Projecteur selon l'une quelconque des revendications précédentes,
dans lequel l'imageur (5) est un réflecteur DLP comprenant des miroirs rabattables.

10. Projecteur selon l'une quelconque des revendications précédentes,
dans lequel l'imageur (5) est un imageur LCD.

11. Projecteur selon l'une quelconque des revendications précédentes,
lequel est ménagé pour un montage dans un téléphone portable.

12. Utilisation d'une LED multicolore dans un projecteur, la LED multicolore étant une LED RVB dans laquelle les couches sont disposées les unes au-dessus des autres pour générer de la lumière rouge, de la lumière verte et de la lumière bleue,
**caractérisée en ce que**
- les couches (31, 32, 33) ne sont pas isolées de manière épitaxiale les unes au-dessus des autres mais sont formées par des diodes électroluminescentes anorganiques individuelles, les diodes électroluminescentes anorganiques présentant une diode électroluminescente inférieure rouge et des diodes électroluminescentes supérieures émettant de la lumière verte et de la lumière bleue, un substrat de croissance étant retiré des diodes électroluminescentes émettant de la lumière verte et de la lumière bleue,
- **en ce que** la LED multicolore présente une seule surface (30) émettant de la lumière, à travers laquelle, pendant le fonctionnement du projecteur, passent en alternance de la lumière rouge, de la lumière verte et de la lumière bleue, et
- **en ce que** la surface (30) émettant de la lumière présente une superficie de maximum 2,5 mm².
